Europäisches Patentamt

European Patent Office

Office européen des brevets

(11) Veröffentlichungsnummer: **0 175 166**
**A2**

## (12) EUROPÄISCHE PATENTANMELDUNG

(21) Anmeldenummer: 85110574.2

(22) Anmeldetag: 22.08.85

(51) Int. Cl.⁴: **G 03 B 27/73**

(30) Priorität: **18.09.84 DE 3434238**

(43) Veröffentlichungstag der Anmeldung: **26.03.86**
**Patentblatt 86/13**

(84) Benannte Vertragsstaaten: **AT BE CH FR GB IT LI NL SE**

(71) Anmelder: **Brugger, Gerhard, Bahnhofstrasse 8, D-8180 Tegernsee (DE)**

(72) Erfinder: **Brugger, Gerhard, Bahnhofstrasse 8, D-8180 Tegernsee (DE)**

(74) Vertreter: **Patentanwälte Grünecker, Kinkeldey, Stockmair & Partner, Maximilianstrasse 58, D-8000 München 22 (DE)**

(54) **Filmbetrachtungsgerät zum farbrichtigen Betrachten von Filmnegativen.**

(57) Die vorliegende Erfindung bezieht sich auf ein Filmbetrachtungsgerät zum farbrichtigen Betrachten von Filmnegativen. Ein bekanntes Filmbetrachtungsgerät hat eine Videokamera, die über eine Farbumkehrschaltung an einen Monitor angeschlossen ist. Ferner enthält sie eine Lichtquelle und eine zwischen der Lichtquelle und der Linse der Videokamera angeordnete Halterung für das Filmnegativ, die direkt am Objektiv der Videokamera befestigt ist und einen Führungsschlitz zum Führen des Filmnegativs aufweist. Bei dem bekannten Filmbetrachtungsgerät konnte der Filmnegativstreifen mechanisch beschädigt werden.

Zum Beheben dieses Nachteils des bekannten Filmbetrachtungsgeräts besteht die Halterung für das Filmnegativ aus einer im wesentlichen waagerecht angeordneten, ebenen und lichtdurchlässigen Auflageplatte, deren Abmessungen größer sind als diejenigen eines einzelnen Filmnegativbildes.

Filmbetrachtungsgerät zum farbrichtigen Betrachten von
Filmnegativen

Beschreibung

Die vorliegende Erfindung bezieht sich auf ein Filmbetrachtungsgerät zum farbrichtigen Betrachten von Filmnegativen nach dem Oberbegriff des Anspruchs 1.

Ein Filmbetrachtungsgerät zum farbrichtigen Betrachten
von Filmnegativen wird im Fotofachhandel angeboten. Das
bekannte Filmbetrachtungsgerät hat eine Videokamera, die
eine eingebaute elektronische Schaltung aufweist, mit
der die Bildsignale, nämlich die Helligkeit- und Farbsignale derart umgeformt werden, daß das Ausgangssignal
bezüglich der Farbe und bezüglich der Helligkeit komplementär zum Eingangssignal ist. Die Videokamera ist über
diese elektronische Farbumkehrschaltung an einen Monitor
angeschlossen. Am Objektiv der Videokamera ist eine Vorsatzlinse angebracht, die ihrerseits über einen Tubus
eine Halterung trägt, in die ein Filmnegativstreifen
durch einen Einführungsschlitz einschiebbar ist. Die Halterung weist an ihrer der Videokamera abgewandten Seite
eine Öffnung auf, gegenüber der eine Lichtquelle angeordnet ist, mit der das Filmnegativ an seiner von der Videokamera abgewandten Seite beleuchtet werden kann. Zum Betrachten der einzelnen Bilder eines Filmnegativstreifens
werden bei dem bekannten Filmbetrachtungsgerät zunächst

0175166

die Filmnegativstreifen aus den üblichen, transparenten Pergamentlabortaschen entnommen und in den Führungsschlitz der Halterung für das Filmnegativ eingeschoben. Dieser Schlitz ist relativ eng ausgeführt, um eine möglichst gute Festlegung des Filmnegativstreifens in der gewünschten optischen Ebene zu erreichen. Demzufolge geht bereits das Einlegen eines Filmnegativstreifens mit einer relativ hohen mechanischen Belastung für den Filmnegativstreifen einher, der zu einer mechanischen Beschädigung des Streifens durch Verkratzen führen kann. Stellt sich nun bei Betrachten des Filmnegativs heraus, daß ein Einzelbild des Filmnegativstreifens nicht im Querformat aufgenommen worden ist, sondern ein Hochformat hat, so muß zum lagerichtigen Betrachten dieses Einzelbildes die Halterung für den Filmnegativstreifen gegenüber der Videokamera durch Lösen einer Sicherungsschraube entriegelt werden, um 90° verschwenkt werden und durch erneutes Anziehen der Sicherungsschraube wieder eingerastet werden. Das bekannte Filmbetrachtungsgerät arbeitet mit einer sehr leistungsstarken Lichtquelle, um ein möglichst weißes, also farbstichfreies Licht zum Erhellen des Filmnegativs zu erzeugen. Die starke Lichtquelle führt zu einer unerwünscht hohen thermischen Belastung des Filmnegativstreifens, der sich aufgrund der Wärmeeinwirkung durch die Lichtquelle verzieht und wölbt. Die Wölbung des Filmnegativstreifens führt zu einem mechanischen Verklemmen des Filmnegativstreifens in dem Führungsschlitz der Halterung, was wiederum die mechanische Belastung des Filmnegativstreifens beim Durchschieben des Streifens zum Betrachten verschiedener Bilder erhöht und eine gesteigerte Gefahr der mechanischen Verkratzung mit sich bringt.

Gegenüber diesem Stand der Technik liegt der vorliegenden Erfindung die Aufgabe zugrunde, ein Filmbetrachtungsgerät nach dem Oberbegriff des Anspruchs 1 so weiterzubilden, daß die Handhabung des Filmbetrachtungsgerätes erleichtert wird und jegliche Gefahr einer Beeinträchtigung der Filmnegativstreifen bei ihrer Betrachtung mit dem Filmbetrachtungsgerät vermieden wird.

Diese Aufgabe wird bei einem Filmbetrachtungsgerät mit den Merkmalen des Oberbegriffs des Anspruchs 1 durch die Merkmale im kennzeichnenden Teil des Anspruchs 1 gelöst.

Bei der nach den kennzeichnenden Merkmalen des Anspruchs 1 ausgeführten Halterung wird der Filmnegativstreifen einfach auf die Auflageplatte aufgelegt. Je nach Lage des Einzelbildes des Filmnegativstreifens kann dieser auf der Auflageplatte verdreht werden, ohne daß hierfür irgendwelche aufwendigen Verstellungen vorgenommen werden müssen, wie dies beim Filmbetrachtungsgerät nach dem Stand der Technik der Fall ist. Ein überraschender Vorteil der Ausbildung der Halterung des Filmbetrachtungsgerätes nach den kennzeichnenden Merkmalen des Anspruchs 1 liegt darin, daß die Filmnegativstreifen beim farbrichtigen Betrachten von Filmnegativen in ihren Pergamentlabortaschen oder Transparentlabortaschen, die die unterschiedlichsten Formate aufweisen können verbleiben können. überraschenderweise hat nämlich die pergamentartige bzw. transparente Wand der Schutzhülle bzw. der Fotolabortasche keinen nennenswerten Einfluß auf die Qualität des mit dem Filmbetrachtungsgerät farbrichtig wiedergegebenen Bildes, so daß die Filmnegativstreifen zum farbrichtigen Betrachten der Filmnegative in ihrer Schutzhülle verbleiben können. Dadurch wird jegliche Verkratzungs- und Verschmutzungsgefahr beim Betrachten der Filmnegative völlig ausgeschlossen, und zudem der Zeitaufwand beim Betrachten und Überprüfen der Filmnegativstreifen erheblich herabgesetzt. Zudem ermöglicht die im kennzeichnenden Teil beschriebene Ausbildung der Halterung des Filmbetrachtungsgerätes nicht nur einen Wechsel der Betrachtung von Hochformat-

bildern auf Querformatbilder ohne jeglichen Umbau von irgendwelchen Teilen, sondern darüber hinaus auch den Wechsel zwischen sämtlichen Negativformaten, ohne daß es hierzu irgendeiner Neueinstellung des Filmbetrachtungsgerätes bedürfte. Die in Anspruch 2 wiedergegebene Ausgestaltung der Halterung ermöglicht eine Verwendung des Filmbetrachtungsgerätes auch in heller Umgebung, da der Bereich zwischen der rückseitig beleuchteten Auflageplatte und der Gehäuseöffnung gegenüber Einwirkung von seitlich einfallendem Licht in der abgesenkten Lage der Andruckplatte vollständig abgeschirmt ist. Diese abgesenkte Lage der Andruckplatte, in der sie auf der Auflageplatte bzw. auf den auf der Auflageplatte liegenden Filmnegativstreifen aufliegt, ist die Betrachtungsstellung des Filmbetrachtungsgerätes, während in der angehobenen Lage der Andruckplatte ein Wechsel von Filmnegativstreifen oder von Pergamentlabortaschen, die die Filmnegativstreifen aufnehmen, durchgeführt werden kann. Auch bei dieser Ausgestaltung der Halterung wird ein Bewegen des Filmnegativstreifens durch einen schmalen Schlitz, wie dies beim Stand der Technik üblich ist, vermieden. Die einzig auftretende Relativbewegung ist diejenige des Anhebens und Absenkens der Andruckplatte bezüglich der Auflageplatte, also eine Bewegung, die lotrecht zur Bildebene liegt. Bei einer derartigen Bewegung ist ein Verkratzen des Filmnegativs grundsätzlich ausgeschlossen. In der Betrachtungsposition der Andruckplatte liegt diese auf der Pergamentlabortasche, die die Filmnegativstreifen enthält, auf, oder liegt direkt auf dem Filmnegativstreifen auf. Die durch das Eigengewicht der Andruckplatte bewirkte Fixierung des Filmnegativs zwischen der Andruckplatte und der Auflageplatte bewirkt eine eindeutige Fixierung des Filmnegativs in der Bildebene, wobei gleichzeitig ein Verwölben oder Verziehen des Filmnegativstreifens durch etwaige thermische Einwirkungen verhindert wird.

Die Weiterbildung des Filmbetrachtungsgerätes nach Anspruch 3 ermöglicht eine besonders einfache Bedienung des Gerätes. Zum Wechsel der Filmnegativstreifen oder zum Verschieben der Filmnegativstreifen bezüglich der Auflageplatte wird die Andruckplatte in ihrer angehobenen Lage mit magnetischen Haltekörpern am Gehäuse fixiert. Auch in dieser Lage zeigt der Monitor das Filmnegativ in seiner farbrichtigen Darstellung, so daß schon eine Vorabbeurteilung des Bildes und ein Verwerfen völlig unbrauchbarer Motive möglich ist, ohne daß es hierzu eines Absenkens der Andruckplatte bedürfte. Gleichfalls kann in dieser Lage der Andruckplatte gearbeitet werden, wenn wegen ausreichender Abdunkelung der Umgebung kein Seitenlichteinfall zu befürchten ist, also eine Abschirmung durch den Balgen unnötig erscheint.

Die in Anspruch 4 beschriebene Weiterbildung des Filmbetrachtungsgerätes führt zu einer kompakten Bauhöhe, da die Abwinklung des Strahlenganges mittels des oberflächenbedampften Spiegels eine Anordnung der Videokamera hinter dem Bereich der Auflageplatte ermöglicht. Im Gegensatz zu einer Ausbildung, bei der die Videokamera oberhalb der Auflageplatte in direkter Verlängerung des Balgens liegt, ermöglicht die Weiterbildung nach Anspruch 4 eine im wesentlichen waagerechte Anordnung der Videokamera, so daß diese lediglich auf eine im Filmbetrachtungsgerät vorgesehene Halterung aufgestellt werden muß.

Die Ausbildung der Auflageplatte nach Anspruch 5 führt zu einer gleichmäßigen Ausleuchtung des Filmnegativs.

Durch die Anordnung der Farbfilter gemäß Anspruch 6 ist es möglich, durch einfaches mechanisches Einschieben von handelsüblichen Farbfiltern in dem Strahlengang zwischen Lichtquelle und Auflageplatte jegliche Farbfehler des Filmnegativs zu kompensieren. Ein weiterer, beträchtlicher Vorteil besteht darin, daß durch Verwendung von Farbfiltern ein farbstichfreies, reinweißes Licht der Lichtquelle entbehrlich wird. Durch die Verwendung von Farbfiltern kann also auch ein farbstichiges Licht der Lichtquelle verwendet werden, da dieses durch einfaches Einfahren eines Farbfilters problemlos kompensierbar ist. Dies ermöglicht die Verwendung von Lichquellen mit niedriger Leistung, wodurch die thermische Belastung an Filmnegativen beim Auflegen auf die Auflageplatte erheblich herabgesetzt wird. Darüber hinaus eröffnet die freie Kompensierbarkeit eines jeden Farbstichs der Lichtquelle die Möglichkeit, eine Birne der Lichtquelle unterhalb ihrer Nennspannung zu betreiben, wodurch deren Lebensdauer vervielfacht wird. Zwar erzeugt eine Birne, die nicht mit ihrer Nennspannung betrieben wird, sondern mit einer unter der Nennspannung liegenden Spannung betrieben wird, ein stark gelbstichiges Licht, was beim Filmbetrachtungsgerät nach dem Stand der Technik zu einer Farbverfälschung des wiedergegebenen Bildes geführt hätte, jedoch kann dieser Farbstich beim Filmbetrachtungsgerät nach Anspruch 6 in einfacher Weise durch Zwischenschieben eines geeigneten Farbfilters beseitigt werden.

Die Weiterbildung nach Anspruch 7 ermöglicht die Verwendung einer beliebigen Videokamera in dem Filmbetrachtungsgerät, da die Lage der Kamera bezüglich der durch das Filmbetrachtungsgerät vorgegebenen optischen Achse durch Anheben oder Absenken des Stativs eingestellt werden kann.

Eine Ausführungsform nach dem Stand der Technik sowie ein bevorzugtes Ausführungsbeispiel der vorliegenden Erfindung werden nachfolgend unter Bezugnahme auf die beiliegenden Zeichnungen näher erläutert. Es zeigen:

Fig.  1        ein bekanntes Filmbetrachtungsgerät;

Fig.  2        einen Querschnitt durch das erfindungsgemäße Filmbetrachtungsgerät;
               und

Fig.  3        eine Vorderansicht eines Details
               des in Figur 2 gezeigten Filmbetrachtungsgerätes.


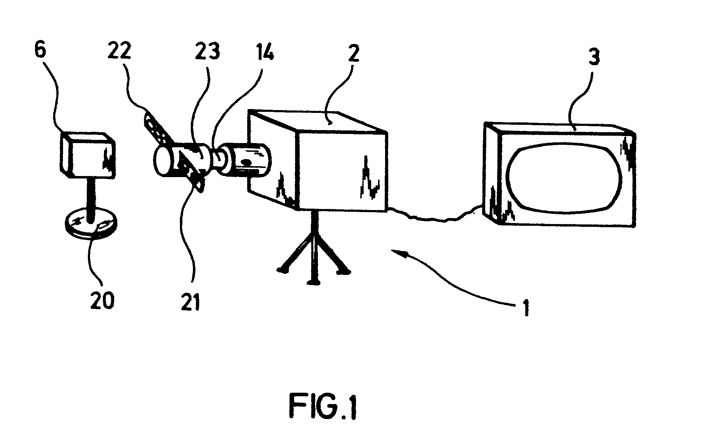

Figur 1 ist eine Darstellung eines bekannten, im Handel
erhältichen Filmbetrachtungsgerätes 1. Eine Videokamera
2, die auf einem Stativ angeordnet ist, enthält eine
elektronische Schaltung, mit der Bildsignale der Videokamera in bezüglich der Farbe und der Helligkeit komplementäre Signale umgeformt werden. Das Ausgangssignal
der elektronischen Schaltung wird einem Monitor 3 zugeführt, der als handelsüblicher Farbfernseher ausgeführt
sein kann. Die Videokamera ist mit einer Vorsatzlinse
14 ausgestattet, an der über einen Tubus 23 eine Negativfilmstreifenführung 21 gehalten ist. Die Negativfilmstreifenführung 21 hat einen quer zur optischen Achse verlaufenden Führungsschlitz, in den ein Negativfilmstreifen 22 eingeschoben werden kann. Ferner enthält das
bekannte Filmbetrachtungsgerät eine Lichtquelle 6 mit
einem Standfuß 20, die derart angeordnet ist, daß der
in die Negativfilmstreifenführung 21 eingeführte Negativfilmstreifen 22 rückseitig beleuchtet wird.

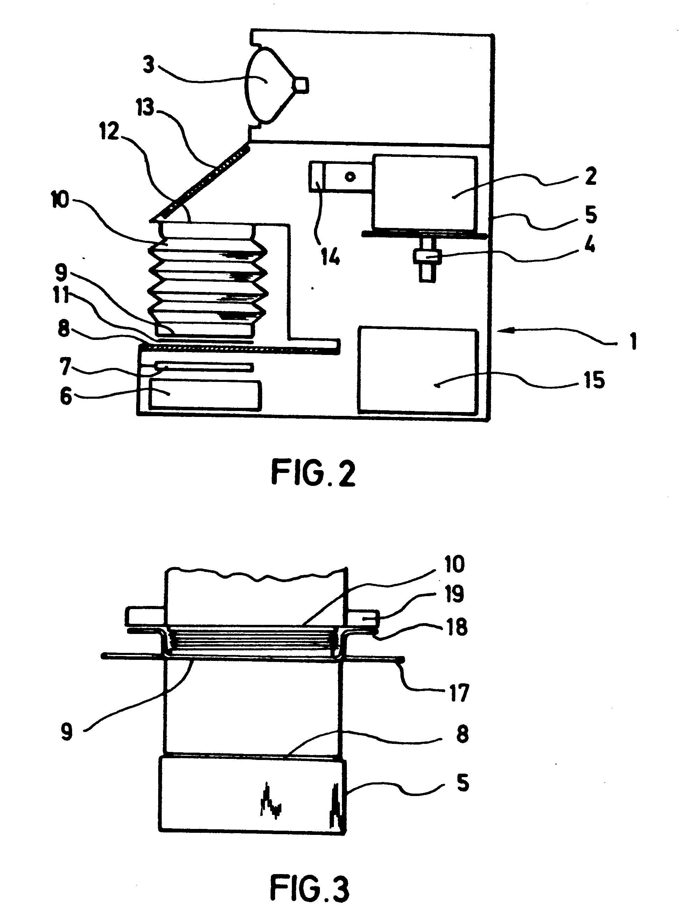

Figur 2 zeigt einen Querschnitt durch ein Filmbetrachtungsgerät 1 gemäß der vorliegenden Erfindung. Das Filmbetrachtungsgerät 1 enthält eine handelsübliche Videokamera 2 und einen Monitor 3, der ein handelsübliches
Farbfernsehgerät sein kann. Die Videokamera 2 und vorzugsweise auch der Monitor 3 sind in einem Gehäuse 5 befestigt. An einer Gehäuseinnenwand ist ein höhenverstellbares Stativ 4 angebracht, das die Videokamera 2 trägt. Im Bereich des Bodens des Gehäuses 5 ist eine Lichtquelle 6 angebracht, die beispielsweise eine Halogenbirne aufweisen kann. Oberhalb der Lichtquelle 6 sind eine Mehrzahl von Farbfiltern 7 schwenkbar gelagert, so daß sie in dem Strahlengang zwischen der Lichtquelle 6 und einer darüber befindlichen, aus Milchglas bestehenden Auflageplatte 8 eingeschoben werden können. Die Auflageplatte erstreckt sich in einer Ausnehmung im Gehäuse bis etwa zur Mitte des Gehäuses, so daß auch relativ große Transparent-Labortaschen mit einer Vielzahl von Negativfilmstreifen auf der Auflageplatte Platz finden. Oberhalb der Auflageplatte 8 befindet sich eine absenkbare, durchsichtige Andruckplatte 9, die vorzugsweise eine übliche Glasplatte ist. Diese Glasplatte ist an ihrer Peripherie mit der unteren Berandung des unteren Endes eines Balgens 10 verbunden. Der Balgen ist an seinem oberen Ende mit einer Öffnung 12 des Gehäuses 5 verbunden. In ihrem abgesenkten Zustand liegt die Auflageplatte 9 auf der transparenten Filmnegativtasche 11, die wiederum auf der Auflageplatte 8 liegt. Die Wand des Gehäuses 5 oberhalb der Öffnung 12 ist im 45°-Winkel gegenüber der Lotrechten geneigt. An der Innenseite dieser geneigten Wand ist ein oberflächenbedampfter Spiegel 13 angebracht, der den Strahlengang von der Lichtquelle 6 über den Filter 7, die Auflageplatte 8, die Andruckplatte 9 durch das Innere des Balgens 10 im 90°-Winkel ablenkt. An dem serienmäßigen Objektiv der Videokamera 2 ist eine Vorsatzlinse 14 angebracht, die den Tiefenschärfenbereich des serienmäßigen Objektivs an die Entfernung zwischen dem Objektiv und der Auflageplatte 8 anpaßt. Die serienmäßige Videokamera ist mit einer ebenfalls im Gehäuse untergebrachten Farbsignalumkehrschaltung 15 verbunden, die ein bezüglich der

Helligkeit und der Farbe zu ihrem Eingangssignal komplementäres Ausgangssignal erzeugt. Dieses Ausgangssignal
wird dem Monitor 3 zugeführt, der ein farbrichtiges,
vergrößertes Bild des auf die Auflageplatte gelegten
Filmnegativs wiedergibt.

Figur 3 zeigt die Seitenansicht auf die linke Seite des
in Figur 2 gezeigten Filmbetrachtungsgeräts 1. In Abweichung zu dem in Figur 2 gezeigten Filmbetrachtungsgerät
1 ist jedoch bei der Darstellung gemäß Figur 3 der Balgen 10 zusammengeschoben und die Andruckplatte 9 nicht
in der unteren Lage, in der sie auf der Auflageplatte 8
liegt, sondern in einer angehobenen Position. Die Randbereiche der Andruckplatte 9 gehen beidseitig in Metallplatten 18 über. Im Bereich der Metallplatten sind Griffe 17 vorgesehen, mit denen die Andruckplatte 9 angehoben und abgesenkt werden kann. Zu beiden Seiten des Gehäuses 5 im Bereich der Öffnung 12 sind an den Seitenwänden des Gehäuses Haltemagnete 19 angebracht. In der
angehobenen Lage der Andruckplatte 9 haften die Metallplatten 18 an den Haltemagneten 19, so daß die Andruckplatte 9 in ihrer oberen Lage fixiert ist.

Abweichend von dem in den Figuren 2 und 3 gezeigten Ausführungsbeispiel kann die Auflagefläche 8 ebenfalls
leicht geneigt angeordnet werden, so lange die Neigung
der Auflageplatte in einem solchen Bereich bleibt, daß
ein auf die Auflageplatte aufgelegter Filmnegativstreifen oder eine auf die Auflageplatte aufgelegte Transparent-Labortasche nicht von dieser abrutscht. Ferner
ist es möglich, nur den kleinen Bereich der Auflageplatte lichtdurchlässig auszuführen, auf dem das Einzelbild
zu liegen kommt, wenn es auf dem Monitor 3 erscheint.
Die übrigen Bereiche der Auflageplatte, die lediglich
als Halterung des Filmnegativstreifens oder der Labortasche dienen, können in diesem Fall aus lichtundurch-

0175166

lässigem Material bestehen.

GRUNECKER. KINKELDEY. STOCKMAIR & PARTNER

PATENTANWALTE
EUROPEAN PATENT ATTORNEYS

A GRUNECKER DIPL ING
DR H KINKELDEY DIPL ING
DR W STOCKMAIR DIPL ING AeE CALTECH
DR K SCHUMANN DIPL PHYS
P H JAKOB DIPL ING
DR G BEZOLD DIPL CHEM
W MEISTER DIPL ING
H HILGERS DIPL ING
DR H MEYER-PLATH DIPL ING
DR M BOTT-BODENHAUSEN DIPL PHYS
DR U KINKELDEY DIPL BIOL

LICENCIÉ EN DROIT DE L UNIV DE GENÈVE

8000 MÜNCHEN 22
MAXIMILIANSTRASSE 58

0175166

Gerhard Brugger

Bahnhofstraße 8

8180   Tegernsee

EP 2512-505/er

— 1 —

**Filmbetrachtungsgerät zum farbrichtigen Betrachten von Filmnegativen**

## Patentansprüche

1.    Filmbetrachtungsgerät zum farbrichtigen Betrachten von Filmnegativen, mit einer Videokamera, die über eine Farbumkehrschaltung an einen Monitor anschließbar ist, mit einer Lichtquelle und mit einer zwischen der Lichtquelle und der Linse der Videokamera angeordneten Halterung für das Filmnegativ, **d a d u r c h   g e k e n n z e i c h n e t ,** daß die Halterung (8,9) eine im wesentlichen waagerecht angeordnete, ebene und lichtdurchlässige Auflageplatte (8) ist, und daß die Länge und die Breite der Auflageplatte (8) in der Auflageebene ein mehrfaches der Länge eines einzelnen Filmnegativbildes betragen.

2. Filmbetrachtungsgerät nach Anspruch 1, d a d u r c h
g e k e n n z e i c h n e t ,
daß die Halterung (8,9) eine auf die Auflageplatte (8)
absenkbare, durchsichtige Andruckplatte (9) aufweist,
deren Randbereiche an dem unteren Ende eines Balgens (10)
befestigt sind, der sich in der auf die Auflageplatte
(8) abgesenkten Lage der Andruckplatte (9) von dieser
ausgehend längs eines Strahlenganges zwischen der Lichtquelle (6) und der Videokamera (2) erstreckt und an seinem oberen Ende an einer Öffnung (12) des Gehäuses (5)
des Filmbetrachtungsgerätes anschließt.

3. Filmbetrachtungsgerät nach Anspruch 2, d a d u r c h
g e k e n n z e i c h n e t ,
daß an der Andruckplatte (8) und am Gehäuse (5) im Bereich der Öffnung (12) magnetische Haltekörper (18,19) angebracht sind, mit denen die Andruckplatte (9) in ihrer
von der Auflageplatte (8) angehobenen Lage am Gehäuse
(5) festlegbar ist.

4. Filmbetrachtungsgerät nach einem der Ansprüche 1
bis 3, d a d u r c h g e k e n n z e i c h n e t ,
daß oberhalb der Öffnung (12) des Gehäuses (5) ein oberflächenbedampfter Spiegel (13) angeordnet ist, der einen ungefähr 45° betragenden Winkel mit dem von der Lichtquelle (6) zur Öffnung (12) des Gehäuses (5) verlaufenden Strahlengang einschließt.

5. Filmbetrachtungsgerät nach einem der Ansprüche 1
bis 4, d a d u r c h g e k e n n z e i c h n e t ,
daß die Auflageplatte eine Milchglasplatte (8) ist.

6. Filmbetrachtungsgerät nach einem der Ansprüche 1
bis 5, d a d u r c h g e k e n n z e i c h n e t ,
daß im Gehäuse (5) in dem zwischen der Lichtquelle (6)
und der Auflageplatte (8) liegenden Bereich mehrere Farbfilter (7) angeordnet sind, die in den Strahlengang zwischen der Lichtquelle (6) und der Auflageplatte (8) einschiebbar sind.

7. Filmbetrachtungsgerät nach einem der Ansprüche 1 bis 6, d a d u r c h   g e k e n n z e i c h n e t , daß in dem Gehäuse (5) ein in seiner Höhe verstellbares Stativ (4) angeordnet ist, an dem die Videokamera (2) befestigbar ist.

FIG.1

2/2

**FIG.2**

**FIG.3**